# EUROPEAN PATENT APPLICATION

(11) **EP 4 574 613 A1**
(43) Date of publication of application: **25.06.2025**
(21) Application number: 23219917.4
(22) Date of filing: 22.12.2023
(51) Int. Cl.: B60W 50/14, B60K 28/06, B60K 28/10

(54) **METHOD FOR INITIATING A SAFETY PROCEDURE FOR DECELERATING A VEHICLE**

(71) Applicant: Volvo Car Corporation, 405 31 Göteborg (SE)
(72) Inventor: NILSSON, Emma, 40531 Göteborg (SE); ZELENIKA ZEBA, Mirta, 40531 Göteborg (SE); SVANBERG, Bo, 40531 Göteborg (SE); BJÖRKLUND, Magnus, 40531 Göteborg (SE)
(74) Representative: Maiwald GmbH

(57) **Abstract**

The disclosure relates to A method (100) for initiating a safety procedure (108) for decelerating a vehicle (10), wherein the method comprises:
- obtaining first data indicative of at least one driving parameter of the vehicle (10),
- obtaining second data indicative of a driver awareness of a driver of the vehicle (10),
- initiating a driver responsiveness check (106) based on the first data and the second data, and
- initiating the safety procedure (108) if the driver responsiveness check (106) is indicative of a fail of the driver responsiveness check (106).

## Description

### TECHNICAL FIELD

The present disclosure relates to a method for initiating a safety procedure for decelerating a vehicle, a computer program product, a data processing apparatus, and a vehicle.

### BACKGROUND ART

When drivers of vehicles suffer sudden illness (e.g., heart failure, syncope, seizure), they may unintentionally press the gas pedal, leading to unwanted accelerations. Such unintentional pressing of the gas pedal can also override vehicle interventions. For example, such an intervention may be automatic emergency braking, which may be overridden if the gas pedal is pressed above a certain threshold.

While abnormal driving behaviors and driver states can be detected using in-vehicle sensors, vehicles are often either too slow to react by initiating a safety procedure for stopping the vehicle or alternatively, prematurely initiate a safety procedure, i.e., without the driver suffering a sudden illness. The first alternative does not increase the safety as much as it is desired, while in the second alternative of false positive triggers of safety procedures, the driving experience of a healthy driver is significantly interrupted by prematurely forcing the vehicle to a stop.

### SUMMARY

The problem is at least partially solved or alleviated by the subject matter of the independent claims of the present disclosure, wherein further examples are incorporated in the dependent claims.

According to a first aspect of this disclosure, there is provided a method for initiating a safety procedure for decelerating a vehicle, wherein the method comprises:
- obtaining first data indicative of at least one driving parameter of the vehicle,
- obtaining second data indicative of a driver awareness of a driver of the vehicle,
- initiating a driver responsiveness check based on the first data and the second data, and
- initiating the safety procedure if the driver responsiveness check is indicative of a fail of the driver responsiveness check.

Accordingly, the method provides for initiating a safety procedure for decelerating a vehicle based on the driving of the vehicle and a driver awareness of the driver of the vehicle. However, the safety procedure is only initiated after a driver responsiveness check is initiated based on the driving of the vehicle and driver awareness, and if the driver responsiveness check is indicative of a fail thereof or, in other words, a result of the driver responsiveness check is a fail or indicative of a fail. Thereby, false positive triggers of safety procedures may be avoided or at least reduced. If the driver responsiveness check is passed, the safety procedure may not be initiated, i.e., the driving of the vehicle may be continued, e.g., in an automated or manual control by the driver. Alternatively, when the driver responsiveness check is failed, the safety procedure is initiated. For example, a control signal indicative of the safety procedure may be provided for controlling the vehicle such that the safety procedure for decelerating the vehicle is being carried out.

For example, the deceleration may be carried out by means of using the friction brakes of the vehicle, using a motor brake of the vehicle and/or one-pedal drive, e.g., in case of an electric vehicle. The vehicle may be a motor vehicle, e.g., an internal combustion engine vehicle or an electric vehicle. The vehicle may be a passenger car, for example. The vehicle may be configured for at least partial autonomous driving. In other words, the vehicle may be an at least partially autonomous vehicle. In particular, the vehicle may at least decelerate, in particular stop, e.g., by emergency or controlled braking, and/or change lanes autonomously for performing the safety procedure.

For example, the initiating of the driver responsiveness check may be provided by executing data configured for carrying out the driver responsiveness check. The driver responsiveness check may be carried out at least partially on any visual, acoustical or similar system of the vehicle, e.g., comprising a display interface, a voice interface, or any other user interface for receiving an input as response to the driver responsiveness check.

For initiating the driver responsiveness check, the first data and the second data are considered. For example, at least one threshold and/or at least one criterion for the first data and/or the second data may be compared to the first data and/or the second data, in particular the at least one driving parameter and/or the driver awareness, in particular at least one driver awareness parameter. When the threshold(s) and/or criterion(s) are met or exceeded, the driver responsiveness check may be initiated and carried out. If they are not met or not exceeded, the driver responsiveness check may not be carried out and the driver will not be bothered with the driver responsiveness check. Accordingly, the driver responsiveness check may serve as an additional determinant for determining that the vehicle is being operated in an unsafe manner, e.g., due to sudden illness of the driver, and should be decelerated, in particular be brought to a stop, to prevent an accident.

The method may be at least partly computer-implemented. Accordingly, one, multiple or all of the steps of the method may be carried out by a computer. The method may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to an example, the at least one driving parameter may be at least one from a speed and an acceleration of the vehicle. For example, the speed and/or the acceleration may be determined based on a gas pedal pressure or, in other words, gas pedal depression, as may be measured by a gas pedal sensor, for example. Alternatively, or additionally, the speed and/or the acceleration may be measured in any other way, e.g., by one or more wheel speed sensors, a GPS sensor, or similar. High speeds and/or high accelerations may be indicative of an unaware, e.g., ill, driver, keeping their foot on the gas pedal and increasing the speed of the vehicle in an uncontrolled manner. Accordingly, e.g., by setting a threshold and/or criterion as explained above, it may be possible to increase the likelihood that the safety procedure is being initiated when the driver is unaware.

According to an example, the method may comprise setting a limit for at least one of a speed and an acceleration of the vehicle based on the first data and the second data. In particular, when the threshold(s) and/or criterion(s) as described above are met, the limit may be set. The same threshold(s) and/or criterion(s) for setting the limit and for initiating the driver responsiveness check may apply. In particular, the limit may be set, when the driver responsiveness check is initiated. However, the limit may be set before, during or after initiating the driver responsiveness check. Thereby, while the driver responsiveness check is being carried out, the driver may be restricted to increase the speed and/or acceleration of the vehicle above the limit. This may be seen as a first measure for preventing an accident of the vehicle when the driver should be unaware. However, it is a much less restrictive measure than the safety procedure, which is only carried out after the driver responsiveness check fails, i.e., the driver does not or not correctly respond to the driver responsiveness check. Still, the limit may substantially help preventing accidents because if the safety procedure will be carried out, it will need to decelerate the vehicle from the speed at the set limit instead of a higher speed, which gives valuable time to prevent any accident to the vehicle.

According to an example, the method may comprise disabling the limit if the driver responsiveness check is indicative of a pass of the driver responsiveness check or, in other words, the result of the driver responsiveness check is a pass or indicative of a pass. Accordingly, the full control or capability of the driving of the vehicle in terms of speed and/or acceleration is handed back to the driver once it is assured that he is aware and that the driver responsiveness check was triggered by a reason not requiring the safety procedure, e.g., the driver being distracted for a short time or similar. Thereby, the limitation of the speed and/or the acceleration is only for a short period of time in case of driver responsiveness checks with a pass result and more likely to be accepted as a safety feature by the driver.

According to an example, the method may comprise initiating outputting of at least one signal indicative of the limit by at least one user interface of the vehicle. The user interface may be any interface by means of which the user or driver of the vehicle may be informed about the set limit, e.g., at least one display, e.g., for infotainment, dashboard and/or as head-up display, at least one speaker or similar. Accordingly, the signal may be output as a visual signal, e.g., in the form of text and/or image or icon, and/or as an acoustic signal, for example. Hence, it is avoided that the driver, should he be aware, is surprised by the set limit or erroneously considers a malfunction of the vehicle or similar.

According to an example, the method may comprise disabling deactivation of at least one safety system of the vehicle and/or enabling at least one safety system of the vehicle. Examples of such safety system may be an automatic emergency braking, a collision warning system, e.g., front collision warning, adaptive cruise control systems, or similar. One or more different safety systems may be disabled for deactivation, while another one or more safety systems may be enabled, for example. In particular, when the threshold(s) and/or criterion(s) as described above are met, the disabling of the deactivation and/or the enabling of the at least one safety system may be carried out. The same threshold(s) and/or criterion(s) for the disabling of deactivation and/or enabling of the at least one safety system and for initiating the driver responsiveness check may apply. In particular, the disabling of deactivation and/or enabling may be carried out when the driver responsiveness check is initiated. However, the disabling and/or enabling may be carried out before, during or after initiating the driver responsiveness check. Thereby, by enforcing the one or more safety systems, the safety during the unaware driving of the driver or, at least during the time of the driver responsiveness check, may be increased.

According to an example, the initiating of the driver responsiveness check may be further based on the at least one driving parameter exceeding a driving parameter threshold for a time period and/or at least one driver awareness parameter of the second data exceeding the driver awareness threshold or meeting a driver awareness criterion for a time period. The time periods may be the same. The time period or time periods may be predefined. The driving parameter threshold may be a driving speed, e.g., above 80 km/h, above 100 km/h or above 120 km/h, for example. The driver awareness parameter may be determined based on one or more measurements, e.g., of a heart beat, a breathing rate, and similar and/or pictures of the driver, e.g., showing a facial expression, direction of gaze, and similar, as may be taken from a camera inside the vehicle, for example. For example, the time periods may be within a range of 3 to 60 seconds, in particular 5 to 50 seconds, further in particular 7 to 45 seconds.

According to an example, the driver responsiveness check may be configured for outputting at least one signal indicative of the driver responsiveness check by at least one user interface of the vehicle. The user interface may be any interface by means of which driver of the vehicle may be informed about the driver responsiveness check, e.g., at least one display, e.g., for infotainment, dashboard and/or as head-up display, at least one speaker or similar. For example, the signal may be or may be configured as a task or information about the initiated driver responsiveness check requiring input or a response from the driver, e.g., by pressing a touch-display.

According to an example, the driver responsiveness check may be configured such that it is being passed if a response from the driver is received by at least one user interface of the vehicle within a time limit after the at least one signal has been output and it is being failed if a response from the driver is not received by the at least one user interface within the time limit. For example, the time limit may be predefined. For example, the limit may be within a range of 1 to 8 seconds, in particular 2 to 6 seconds, further in particular 3 to 5 seconds, e.g., about 3 seconds. It may further be provided that the driver responsiveness check is failed if a responsive from the driver is incorrect. For example, the driver responsiveness check may be configured such that a specific response is required. For example, there may be two or more types of responses or two or more possibilities of responding to the signal, where only one of the responses is correct and the other one is incorrect. The incorrect response indicates that the user is actually unaware despite responding to the driver responsiveness check. In this case, the driver responsiveness check may still fail. The user interface for receiving the response may be the same as the one putting out the signal indicative of the driver responsiveness check or a different one, e.g., being a microphone or a camera or sensor for gesture recognition. For example, the response may be a touch of one or more buttons or sections on a touch display as user interface, one or more voice responses via the microphone, a hand gesture or other gesture, or similar. Further, alternatively, the user interface may be the gas pedal, a brake pedal, a steering wheel and/or any other user interface for controlling the vehicle. The driver responsiveness check may require the driver to perform a driving action as response, e.g., using the brake pedal, stepping of the gas pedal, switching lanes with the steering wheel or similar. In case the user interface for the output of the signal and the user interface for receiving the response from the driver are different, the user interface of the output of the signal may also be referred to as an output user interface, while the user interface for receiving the response may also be referred to as an input or response user interface.

According to an example, the second data may be indicative of the driver awareness of the driver during acceleration of the vehicle and/or during a time at which the at least one driving parameter exceeds a driving parameter threshold. Additionally, or alternatively, the second data may be obtained at a time after the at least one driving parameter exceeds the driving parameter threshold. Thereby, the second data may not be permanently obtained. Instead, the second data may only be obtained, when necessary, e.g., at high speeds.

According to an example, the driver awareness may relate to one or more of the driver having or not having hands on a steering wheel of the vehicle, a steering behavior of the driver, the driver looking onto a road being travelled by the vehicle or not, a posture of the driver, a facial color of the driver, a gaze behavior of the driver, a heart rate of the driver, a breathing behavior of the driver, a blood pressure of the driver, and a facial expression of the driver. In particular, the at least one driver awareness parameter may be indicative of one or more of the driver having or not having hands on a steering wheel of the vehicle, a steering behavior of the driver, the driver looking onto a road being travelled by the vehicle or not, a posture of the driver, a facial color of the driver, a gaze behavior of the driver, a heart rate of the driver, a breathing behavior of the driver, a blood pressure of the driver, and a facial expression of the driver. Any of the aforementioned may be detected by a camera, sensor, or user interface, for example. For example, at least whether or not the driver has his hands on the steering wheel of the vehicle, whether the driver is looking onto a road being travelled by the vehicle or not, a posture of the driver, a facial color of the driver, a gaze behavior of the driver, and a facial expression of the driver may be detected by an interior camera of the vehicle, which may take pictures and/or record video of the driver during driving. For example, image processing of these pictures and/or video may be carried out for detecting any of the aforementioned. For example, a heart rate of the driver, a breathing behavior of the driver, and the blood pressure of the driver may be detected by a sensor of the vehicle itself or a vehicle external sensor, e.g., of a watch of the driver, which may be communicatively couplable to the vehicle.

According to an example, the safety procedure may be configured for stopping the vehicle. In particular, the safety procedure may be configured such that the stopping of the vehicle is carried out in a traffic free zone. For this purpose, the method may further comprise determining a traffic free zone, in particular ahead of the vehicle, and driving the vehicle towards it for stopping it there, e.g., by steering it into a shoulder of a road lane.

According to a second aspect, there is provided a computer program product comprising instructions which, when the program is executed by a computer, cause the computer to carry out the method according to the first aspect of this disclosure.

For example, the computer program product may be a computer program as such or a product, on which the computer program may be stored, e.g., a computer-readable storage medium.

According to a third aspect, there is provided a data processing apparatus comprising means for carrying out the method of the first aspect of this disclosure. The data processing apparatus may be a computer or control unit of the vehicle, for example. The means may be suitable processing means and/or the computer program product, for example.

According to a fourth aspect, there is provided a vehicle comprising the data processing apparatus of the third aspect of this disclosure.

The vehicle may further comprise the elements or systems as described herein, e.g., the user interface or user interfaces, the safety system or safety systems, one or more sensors and/or cameras, the computer program product, and/or the data processing apparatus.

It should be noted that the above examples may be combined with each other irrespective of the aspect involved. Accordingly, the method may be combined with structural features and, likewise, the computer program product, data processing apparatus, and vehicle may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic illustration of a method according to an example of this disclosure;
- Figure 2: shows a schematic illustration of a vehicle for carrying out the method of Fig. 1.

### DETAILED DESCRIPTION

The Figures are merely schematic representations and serve only to illustrate examples of the disclosure. Identical or equivalent elements are in principle provided with the same reference signs.

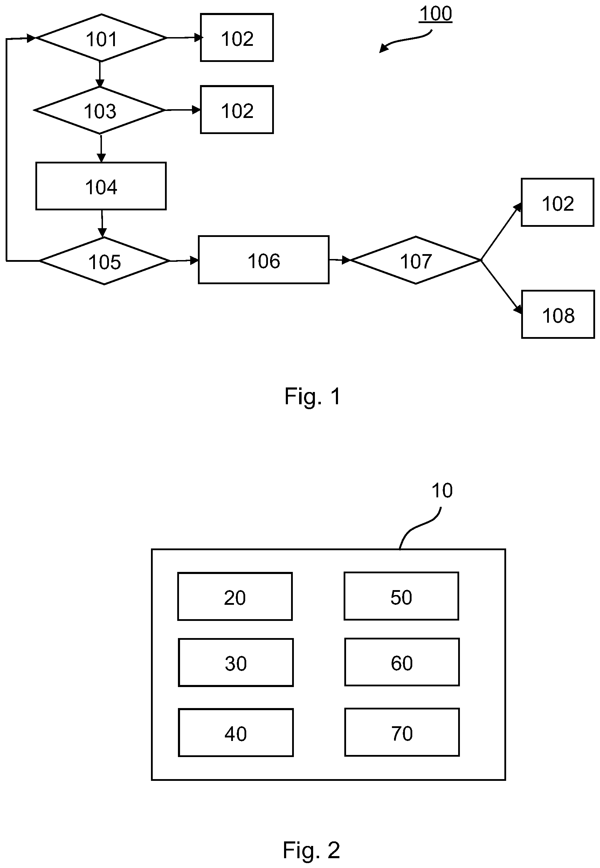

Figure 1 shows a method 100 for initiating a safety procedure for decelerating the vehicle 10 as schematically shown in Fig. 2. The method 100 may be carried out based on instructions stored on a computer program product 60 of the vehicle 10, in particular by a data processing apparatus 70, which may be a computer.

In a first step 101 of method 100, the first data indicative of at least one driving parameter of the vehicle 10 is being determined. For example, the at least one driving parameter may be at least one from a speed and an acceleration of the vehicle 10. This determination may be based, for example, on a gas pedal pressure or depression. The gas pedal of the vehicle 10 may be one user interface 20, in particular an input user interface, of the vehicle 10, by means of which the driver of the vehicle 10 may provide input to the vehicle 10, in this example in form of an acceleration request.

Further, in, before and/or after the first step 101 of method 100, the at least one driving parameter is compared to a driving parameter threshold. As long as the threshold is not exceeded, the driver of the vehicle 10 is further provided with a full capability 102 for controlling the vehicle 10.

In a second step 103 of method 100, second data indicative of a driver awareness, e.g., one or more driver awareness parameters, of the driver of the vehicle 10 is obtained. Second step 103 may be dependent on first step 101, in particular in that it may be required that the driving parameter threshold is exceeded to carry out step 103. The full capability may comprise at least that the driver may accelerate the vehicle 10 as he desires and only limited by the technical capabilities of the vehicle 10.

The second data may be obtained from a driver awareness system 50, which may comprise one or more sensors or cameras, for example. For example, the driver awareness system 50 may comprise an interior or cabin camera for monitoring the driver and/or other passengers of the vehicle 10. Thereby, the driver awareness system 50 may for example determine whether the driver has his hands on a steering wheel of the vehicle 10 or not, is looking onto a road being travelled by the vehicle 10 or not, and/or optional determine the posture, facial color, gaze behavior of the driver, and/or facial expression of the driver. Based on that, the driver awareness system 50 may determine how aware the driver is.

Similar to the first step 101, in, before and/or after the second step 103 of method 100, the at least one driver awareness parameter may be compared to a driver awareness parameter threshold or criterion. As long as the threshold is not exceeded or the criterion is not met, the driver of the vehicle 10 is further provided with a full capability 102 for controlling the vehicle 10.

If both thresholds are exceeded, then the method 100 may continue with the third step 104. In the optional third step 104, a warning or information may be output to the driver, e.g., via a user interface 30 of the vehicle 10, which may be an output user interface 30 such as but not limited to a display, for example. Additionally, or alternatively, in the third step 104, a limit for at least one of a speed and an acceleration of the vehicle 10 may be set and a corresponding signal indicative thereof may be output via the user interface 30. Accordingly, the driver is not anymore provided with a full capability to drive the vehicle 10, but limited at least in the speed and/or acceleration of the vehicle 10. Also, additionally, or alternatively, in the third step 104, it may be disabled that at least one safety system 40 of the vehicle 10 may be deactivated and/or the at least one safety system 40 or another safety system 40 of the vehicle 10 may be enabled.

Then, in an optional fourth step 105, it may be checked whether the at least one driving parameter exceeds the driving parameter threshold for a predefined time period, e.g., of at least 3 seconds, and/or the at least one driver awareness parameter of the second data exceeds the driver awareness threshold or meets a driver awareness criterion for the predefined time period. If one or both thresholds are exceeded for the predefined time period, a driver responsiveness check 106 may be initiated. The driver may be required to respond to the driver responsiveness check 106 via the user interface 20, which may be announced to him via the user interface 30, for example, e.g., by lifting the foot from the gas pedal. Alternatively, another user interface 20 may be used for receiving the response, e.g., in the form of the user interface 30, i.e., a display on which the driver may press a virtual button indicating that he is capable to drive further, for example.

The driver responsiveness check 106 may for example be configured such that it is being passed if a response from the driver is received by the user interface 20, 30 of the vehicle 10 within a predefined time limit after putting out the signal regarding the limitation of the speed of the vehicle 10, and it is being failed if a response from the driver is not received by the user interface 20, 30 within the time limit.

In case the driver responsiveness check 106 has a pass as a result 107 of the driver responsiveness check, the method 100 proceeds to giving the driver back the full capability 102 to drive the vehicle 100, i.e., removes the speed limit. However, if the driver responsiveness check 106 has a fail as the result 107, the method 100 proceeds to a safety procedure 108 for decelerating, in particular stopping, the vehicle 10.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 20: input user interface
- 30: output user interface
- 40: safety system
- 50: driver awareness system
- 60: computer program product
- 70: data processing apparatus
- 100: method
- 101: first step
- 102: full capability
- 103: second step
- 104: third step
- 105: fourth step
- 106: driver responsiveness check
- 107: result of driver responsiveness check
- 108: safety procedure

## Claims

1. A method (100) for initiating a safety procedure (108) for decelerating a vehicle (10), wherein the method comprises:
- obtaining first data indicative of at least one driving parameter of the vehicle (10),
- obtaining second data indicative of a driver awareness of a driver of the vehicle (10),
- initiating a driver responsiveness check (106) based on the first data and the second data, and
- initiating the safety procedure (108) if the driver responsiveness check (106) is indicative of a fail of the driver responsiveness check (106).

2. The method (100) according to any one of the previous claims, wherein the at least one driving parameter is at least one from a speed and an acceleration of the vehicle (10).

3. The method (100) according to claim 1 or 2, wherein the method (100) comprises setting a limit for at least one of a speed and an acceleration of the vehicle (10) based on the first data and the second data.

4. The method (100) according to claim 3, wherein the method (100) comprises disabling the limit if the driver responsiveness check (106) is indicative of a pass of the driver responsiveness check (106).

5. The method (100) according to claim 3 or 4, wherein the method (100) comprises initiating outputting of at least one signal indicative of the limit by at least one user interface (20, 30) of the vehicle (10).

6. The method (100) according to any one of the previous claims, wherein the method (100) comprises disabling deactivation of at least one safety system (40) of the vehicle (10) and/or enabling at least one safety system (40) of the vehicle (10) based on the first data and/or the second data.

7. The method (100) according to any one of the previous claims, wherein the initiating of the driver responsiveness check (106) is further based on the at least one driving parameter exceeding a driving parameter threshold for a time period and/or at least one driver awareness parameter of the second data exceeding the driver awareness threshold or meeting a driver awareness criterion for a time period.

8. The method (100) according to any one of the previous claims, wherein the driver responsiveness check (106) is configured for outputting at least one signal indicative of the driver responsiveness check (106) by at least one user interface (20, 30) of the vehicle (10).

9. The method (100) according to claim 8, wherein the driver responsiveness check (106) is configured such that it is being passed if a response from the driver is received by at least one user interface (20, 30) of the vehicle (10) within a time limit after the at least one signal has been output and it is being failed if a response from the driver is not received by the at least one user interface (20, 30) within the time limit.

10. The method (100) according to any of the previous claims, wherein the second data is indicative of the driver awareness of the driver during acceleration of the vehicle (10) and/or during a time at which the at least one driving parameter exceeds a driving parameter threshold.

11. The method (100) according to any of the previous claims, wherein the driver awareness relates to one or more of the driver having or not having hands on a steering wheel of the vehicle (10), a steering behavior of the driver, the driver looking onto a road being travelled by the vehicle (10) or not, a posture of the driver, a facial color of the driver, a gaze behavior of the driver, a heart rate of the driver, a breathing behavior of the driver, a blood pressure of the driver, and a facial expression of the driver.

12. The method (100) according to any one of the previous claims, wherein the safety procedure (108) is configured for stopping the vehicle (10).

13. A computer program product (60) comprising instructions which, when the program is executed by a computer, cause the computer to carry out the method (100) of any one of the previous claims.

14. A data processing apparatus (70) comprising means for carrying out the method (100) of any one of claims 1 to 12.

15. A vehicle (10) comprising the data processing apparatus (70) of claim 14.
